(19) Europäisches Patentamt / European Patent Office / Office européen des brevets

(11) **EP 2 607 980 B1**

(12) **EUROPEAN PATENT SPECIFICATION**

(45) Date of publication and mention
of the grant of the patent:
**11.02.2015 Bulletin 2015/07**

(51) Int Cl.:
**G05F 1/67** *(2006.01)*     **H02J 7/35** *(2006.01)*

(21) Application number: **11195408.7**

(22) Date of filing: **22.12.2011**

(54) **Method and apparatus for tracking the maximum power point of a photovoltaic array**

Verfahren und Vorrichtung zur Verfolgung des maximalen Leistungspunkts einer Photovoltaikanordnung

Procédé et appareil pour le suivi du point d'alimentation maximale d'un réseau photovoltaïque

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2013 Bulletin 2013/26**

(73) Proprietor: **Stichting IMEC Nederland
5656 AE Eindhoven (NL)**

(72) Inventors:
• **Qiu Yifeng
5625 PA Eindhoven (NL)**

• **Van Liempd, Christinus Antonetta Paulus
5481 KH Schijndel (NL)**

(74) Representative: **McCartney, Jonathan William
Haseltine Lake LLP
Redcliff Quay
120 Redcliff Street
Bristol BS1 6HU (GB)**

(56) References cited:
**EP-A2- 1 457 857**     **EP-A2- 1 635 438**
**WO-A1-2011/122165**     **WO-A2-2006/002380**
**US-A- 4 404 472**

EP 2 607 980 B1

**Description**

BACKGROUND

Maximum-power-point tracking (MPPT) is an integral part of an energy conversion system based on solar, or more generally photovoltaic (PV), cells. The purpose of the MPPT is to track the instantaneous power level which is subject to change with incident light intensity, in order to maximize the overall system efficiency ($n=P_{out}/P_{av}$, output power over available power). An energy conversion system for solar cells consists of a DC/DC converter and an MPPT circuit. The DC/DC converter has one or more tunable variables or parameters that allow it to vary the amount of converted power. In the context of harvesting energy from solar cells and charging an energy storage system, the converted power needs to be adjusted continuously in order to maintain maximum energy conversion efficiency, because the voltages of both the solar cells and the energy storage system are subject to change over time. The MPPT circuit finds the optimal values of these variables using input or output electrical information.

The MPPT circuit usually employs an algorithm, either built in or implemented externally using a dedicated DSP/FPGA hardware. Numerous MPPT algorithms have been developed; each has its pros and cons. Tracking the MPP requires a dynamic process, which means the algorithm has to be invoked at certain intervals so that it can follow the change of input power and run-time parameters, such as temperature and output voltage of the converter. Two major benchmarks of a MPPT technique are accuracy and efficiency. In other words, a good MPPT technique should be able to reach a good accuracy in as short a time as possible. Further, some techniques require prior knowledge of the solar cell to be used, thus compromising their generality.

Detailed comparisons of the state-of-the-art MPPT techniques can be found in V. Salas, E. Olias, A. Barrado, A. Lazaro, "Review of the maximum power point tracking algorithms for stand-alone photovoltaic systems," Solar Energy Materials and Solar Cells, Volume 90, Issue 11, 6 July 2006, Pages 1555-1578.

Most of these techniques are generally applied to high-power scenarios where the power consumption of the control circuit and the MPPT circuit is of little concern.

In the context of indoor PV energy harvesting, the available power level is often of the order of a hundred microwatts or lower, but the requirements on the MPPT are more or less the same. Thus, existing techniques are not automatically suitable for ultra-low-power applications.

Generally speaking, there are two major categories where most techniques belong, as described in the Salas article. In the category called "quasi-seeking", a database containing specific data related to e.g. irradiation and temperature, or a set of mathematical functions based on empirical rules, is used. Examples are the look-up table and short-circuit current methods. These techniques usually require prior knowledge of the solar cell and ambient temperature. Thus they cannot be used with any solar cell, and they require the measurement of input or output parameters. The other category is called "true seeking", where the optimum operation point is obtained through an iterative feed-back process. Examples are "hill-climbing", or "perturb and observe" (P&O), and differentiation. These techniques automatically take into account the properties of solar cells and environment conditions and do not require prior knowledge of the solar cell.

None of the existing techniques satisfies all the requirements of ultra-low-power photovoltaic systems at the same time. For example, the hill-climbing method, which is by far the most popular technique, is independent of the PV array and is capable of reaching the true maximum power point (MPP). It can also be implemented with low-power circuits. However, it uses a lengthy iterative process, in which several non-optimal operation points have to be tried before reaching an optimal one. In this sense, it is not efficient enough for ultra-low-power applications. The look-up table method can be very efficient but for every different solar cell a new table is required and the table should also include the dimension of temperature. The short-circuit method can be very efficient and fast, but it is a computation-intensive method, which is unsuitable for ultra-low-power applications. Again, this method is still temperature-dependent.

A method of MPPT using a lookup table storing a "decision index" (DI) parameter, in combination with a perturb-and-observe control method, is described in Mehrnami and Farangi, "Innovative Decision Reference Based algorithm for Photovoltaic Maximum Power Point Tracking", Journal Of Power Electronics, Vol. 10, No. 5, September 2010, pages 528-537. The MPPT method here uses a look-up table, which is pre-coded with respect to a given solar cell array. Hence, this method requires prior characterisation of the connected solar cell array.

SUMMARY OF THE INVENTION

The aim of the invention is to propose an MPPT system that is accurate, efficient and ultra-low-power while remaining generic to all types of solar cells.

The concept behind the invention, which is defined in its first aspect in claims 1 and 7, is to combine the techniques from the two categories above.

Embodiments of the invention use iterative procedures such as the hill-climbing method, but include features from the look-up table method and the short-circuit method. First, starting usually from zero, a look-up table containing index/value pairs is built dynamically at run-time. The index here can conveniently be the digitized short-circuit current $I_{sc}$ of the solar cell array, and the corresponding values represent optimal values of a tunable variable for extracting power from the array, in particular, a control parameter which when applied enables a DC/DC converter to work at the maximum-power point of the solar cell array. Typically this control parameter will be inversely proportional to the duty cycle (D) of the converter.

The look-up table is thus usually empty at the beginning of operation and is gradually filled in during the runtime. Generally the short-circuit current $I_{sc}$ is roughly proportional to the maximum available power of the array. Thus each index value corresponds to the unique maximum-power point for a given environment. The hill-climbing method is used to find the optimal value that leads to the MPP. This optimal value is stored in the table at the position of the index. When the MPPT algorithm runs next time, the stored value can be retrieved from the table without going through the lengthy hill-climbing process. If for instance the output voltage of the DC/DC converter increases, because the amount of incident radiation increases, or the temperature changes, a different optimal value would be needed. If a table entry already exists, it is immediately used. If not, a new one is generated as above.

Preferably the entries in the table are updated periodically in any event, even if an entry is present. Since the environment conditions do not change instantaneously, the update can be done at a much longer interval than is required for the MPPT routine itself.

The measurement of the short-circuit current and conversion into an index can be done easily and within a very short period of time. The overall efficiency is therefore improved over using Hill-Climbing alone. As it is based on Hill-Climbing, it is generic for all kinds of solar cells. Further, this method ameliorates the weakness of the Hill-climbing method with changing environment conditions, thanks to the look-up table.

While, in preferred embodiments, the index of the table has a predefined range for the control parameter, the data points themselves are not pre-defined. Rather, they are obtained from the hill-climbing method during operation of the array. To be suitable for any PV array, the index range is designed in such way that it would suit a wide range of $I_{sc}$. The measured $I_{sc}$ is used to determine the index in the table and is used as a direct indication of the current power level.

The hill-climbing method is the iterative method preferably used to find the optimum control parameter value for the current power level. This optimum value is then stored in the table with the index, which is the digitized $I_{sc}$. This process is generic and automatically takes into account the variation of temperature and ageing. Once the optimum value at a certain index is stored, it is re-used for a longer interval time, of the order of minutes, during which ambient conditions can be expected to remain reasonably constant.

Thus, the proposed method can be said to comprise a main algorithm and a subroutine algorithm. The use of the lookup table and the $I_{sc}$ measurement are part of the main algorithm, while the hill-climbing method can be regarded as the subroutine algorithm, which has the task of filling in the table with acquired data, in the initialisation phase, and updating it from time to time.

The invention is also directed to a corresponding controller for a photovoltaic array, as defined in claim 9.

Further, in an alternative aspect, the invention relates to a method of measuring the output of a photovoltaic array subject to varying external influences, the method having the following steps: disconnecting the array from its load, if it is connected; connecting a reverse voltage across the array; and measuring the resulting current. The measurement can be carried out at intervals, representing a small fraction of the normal (forward-connected) operating cycle. The measuring can be done by converting the current into another variable such as a frequency and then digitised, and to minimise the disconnection time it can be done by sampling, e.g. using a sample-and-hold circuit. The measurement can be used in a maximum-power-point tracking system.

A corresponding apparatus has co-ordinated switches connected to the array in pairs in such a way that, when one pair is on and the other is off, the array is connected to a load, while when the pairs are reversed the array is reverse-connected to a voltage source and a means for measuring the resulting reverse short-correct current.

BRIEF DESCRIPTION OF THE DRAWINGS

For a better understanding of the invention, embodiments of it will now be described, by way of example, with reference to the accompanying drawings, in which:

Figure 1    shows a proposed embodiment of an energy-harvesting system; Figure 1a is an overall schematic, while Figure 1b shows some of the circuit detail;

Figure 2    shows an illustration of DCM and PSM;

Figure 3    show the relation of the control parameter NSKIP and the output power;

Figure 4    shows the flow chart of the hill-climbing algorithm; and

Figure 5    shows a flow chart of the controller.

DETAILED DESCRIPTION OF EMBODIMENTS

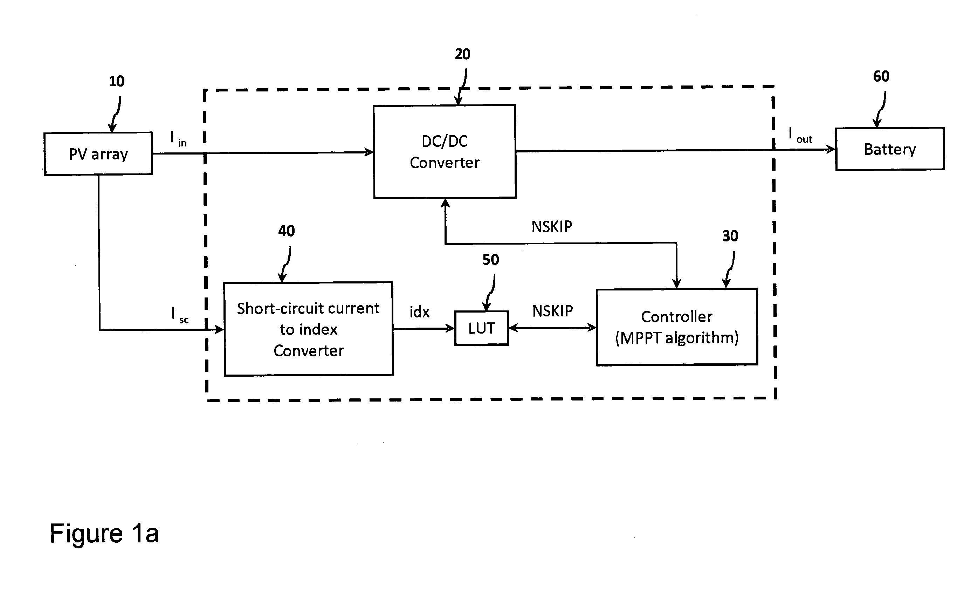

A DC/DC converter 20, e.g. an inductive Buck-Boost converter, with a controller 30 having a maximum power point tracking algorithm, is used to convert energy from a solar cell array 10, as shown in **Figure 1a.** The converter 20 charges the battery 60, e.g. a 3V Li-ion battery, at a suitable voltage. Input to the controller 30 is from an $I_{sc}$/idx converter 40 and a look-up table 50, described below.

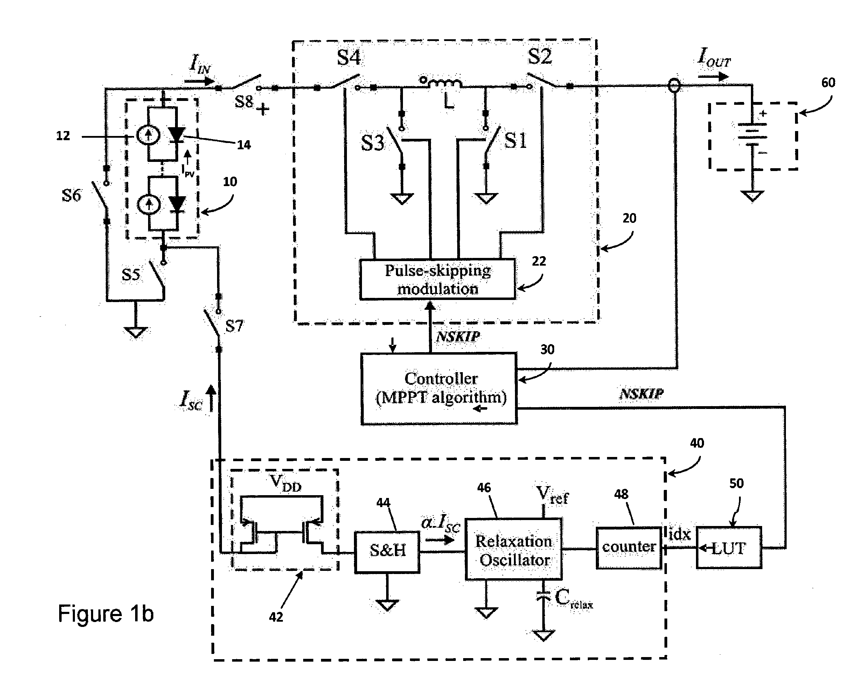

As shown in **Figure 1b**, the converter 20 contains an inductor L between the input (solar cell array 10) and load or output (battery 60). The circuit is interruptible on the input side by a switch S4 and on the output side by a switch S2. Input and output sides of the inductor can also be connected to ground by controllable switches S3 and S1 respectively. All four controllable switches are controlled by the controller 30 via a Pulse-Skipping Modulation (PSM) module 22.

The solar-cell array 10 consists of a number of solar cells in series, here simply depicted as current generators 12 with a diode 14 in parallel with each current generator. A normally-closed pair of switches S8, S5 connects the array anode to the converter 20 and its cathode to ground.

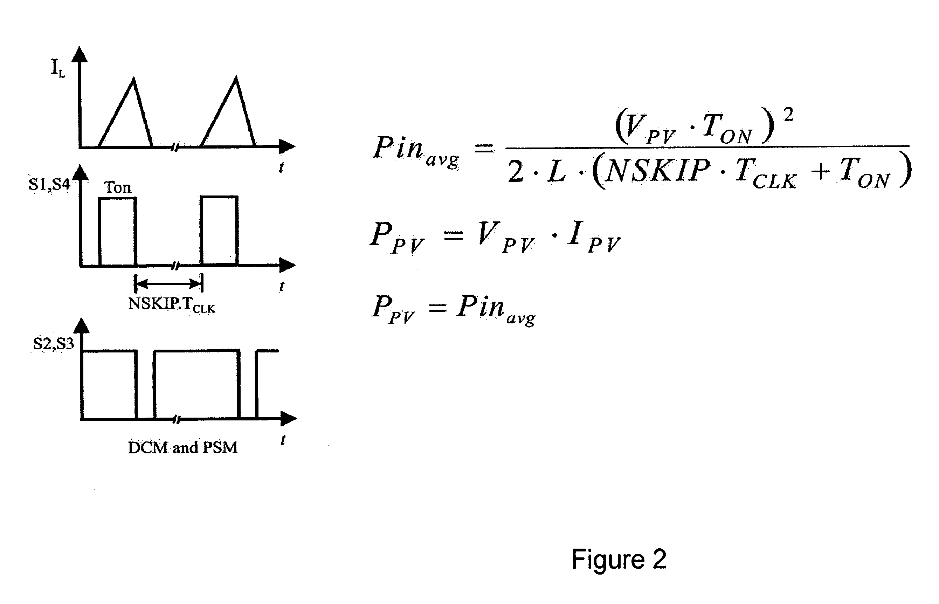

The converter operates in discontinuous conduction mode (DCM) using pulse-skipping modulation (PSM), as illustrated in **Figure 2.** DCM means that the inductor current goes to zero first before ramping up again. Pulse-skipping means that a certain number of clock cycles are skipped between two pulses. By controlling the number of the skipped pulses (NSKIP), the input power Pin and the resulting output power of the converter are changed, as shown in the formula in Figure 2, where $P_{PV}$ is the instantaneous input power Pin and $Pin_{avg}$ is the average input power. "PV" refers to the PV array. Further, $T_{ON}$ is the time S1 and S4 are on and the inductor L is ramping up. The maximum power point is reached when the input power of the converter matches the maximum available power of the solar cell array and the resulting output power is maximized. The purpose of the MPPT algorithm is to find the optimal NSKIP value that leads to maximum power conversion efficiency. The following assumptions are made:

- Given a fixed solar-cell array for given atmospheric conditions (but ignoring partial shadowing of the solar-cell array), there is a one-to-one mapping between the short-circuit current and the maximum-power point. There is one and only one global maximum-power point (MPP). The maximum-power point refers to a certain combination of the output current $I_{PV}$ and the output voltage $V_{PV}$ of the solar cell array, which leads to the MPP.

- There is then a unique NSKIP value with which the DC/DC converter interfacing the solar cell array is able to operate at the MPP above. Multiple factors may influence this value, such as output voltage of the DC/DC converter and temperature. However, at a given moment, this value can be uniquely determined.

- The atmospheric conditions and the output voltage of the DC/DC converter change slowly, so that the same NSKIP value can be re-used for a longer period of time, say several minutes.

From the assumptions above, it can be deduced that the short-circuit current can be used as an index that is linked to a control parameter value leading to the MPP. While a system could be run purely by measuring the MPP every cycle, this is a slow process. With embodiments of the invention, however, a look-up table (LUT) is built at run-time, which contains index/value pairs. The parameter value can be found by various maximum power point tracking (MPPT) techniques, such as Hill-Climbing or the Incremental Conductance method. Once determined, the parameter values can be simply read from the look-up table, and the time-consuming Hill-Climbing process can be skipped. The index/ value pairs only need to be refreshed at longer intervals. Once the system is running, therefore, the time spent on the MPPT is minimized.

The system therefore operates in a main and a sampling/ update mode. During the main mode the instantaneous $I_{sc}$ is measured and digitized, to identify the index of the LUT, from which the corresponding control parameter value (NSKIP) is retrieved when it is non-empty. This value is used to control the operation of the DC/DC converter. The update mode is invoked less frequently, during which the subroutine algorithm, i.e. the hill-climbing method, updates an entry in the LUT. The subroutine method is also invoked if the entry of the LUT is empty, i.e. its value is zero.

The short-circuit current is first sampled and then converted into a frequency signal ($F_c$) using a relaxation oscillator. A counter counts the frequency signal during a certain fixed period of time ($T_s$). The result of the counter is the index *idx*. The index is proportional to the short-circuit current, as shown in the formulae below.

$$I_{SC} \cdot \alpha \cdot \frac{1}{F_C} = C_{relax} V_{ref}$$

$$idx = T_S \cdot F_C = \frac{T_S \cdot I_{SC} \cdot \alpha}{C_{relax} V_{ref}}$$

where $C_{relax}$ and $V_{ref}$ are the capacitance and the reference voltage of the relaxation oscillator; and $\alpha$ is a conversion factor of the short-circuit current sampler.

Referring back to Figure 1, the implementation shown therefore also includes a short-circuit current measurement means in the form of a current/index sampler and converter 40 and a look-up table (LUT) 50; the MPPT algorithm controller 30 coordinates these parts.

The anode of the solar array 10 is connected via a switch S8 to the converter and its cathode via a switch S5 to ground, as noted above. A further switch S6 shorts the anode of the solar cell array to ground, and a series switch S7 connects the cathode to the current sampler 40. The current sampler consists of a high-side PMOS current mirror 42, a sample-and-hold circuit 44, a relaxation oscillator 46 and a counter 48 in series.

In normal operation (the main routine), switches S5 and S8 are closed while S6 and S7 are open. During this operation the controller 30 uses the LUT 50. If an entry is missing, or if it is time for an update, the $I_{sc}$ sampling mode or subroutine is invoked.

When in $I_{sc}$ sampling mode, S5 and S8 are open while S6 and S7 are closed. The anode of the solar-cell array is connected to ground while its cathode is connected to the PMOS current mirror in the sampler circuit 30 via switch S7. In this case, the solar cell array operates with reverse voltage given by the supply voltage of the PMOS current mirror minus the voltage drop of the diode-connected PMOS mirror transistor. Hence, the parallel diodes 14 of the solar cell array are reverse-biased and cannot conduct current. Thus an equal and full amount of the short-circuit current flows. The second transistor of the PMOS current mirror then outputs the same current to the sampler. This scheme can work accurately with any number of series solar cells because the reverse voltage across a solar cell can be of any value to give the short-circuit current.

In order to minimize the $I_{sc}$ sampling time (because sampling time is essentially "wasted time" for power generation), the current is converted into a voltage and stored on a sample-and-hold (S/H) capacitor (not shown). After the sampling, the connection to the solar cell array is restored. The S/H capacitor is able to provide a reference current, proportional to $I_{sc}$, to the relaxation oscillator. The frequency signal output $F_c$ of the relaxation oscillator is counted over a certain interval by the counter 48. The size of this interval depends on the desired bit resolution of the converted $I_{sc}$. After sampling, the output of the counter contains the digitized short-circuit current, i.e. the index idx.

The basic principle of the hill-climbing method is to change the NSKIP value until the output power of the converter is maximized. By assumption, there is only one global maximum. Thus, when MPP is reached, increasing or decreasing the NSKIP value at that point would lead to decrease of the output power. At each iteration, the NSKIP value is increased or decreased by a certain amount. The output current of the converter is measured and compared with the output current when using the previous NSKIP value. If the output current has increased, the algorithm then moves to the new NSKIP value. The new value is calculated on the basis of the present NSKIP value and the chosen step size. In this example there are two step sizes, "coarse" and "fine". The coarse step size means that the new NSKIP value is e.g. either doubled or halved. This is used for fast movement across the power curve. The fine step size means the current NSKIP value is increased or decreased by e.g. 1/8. This is used for accurate location of the MPP.

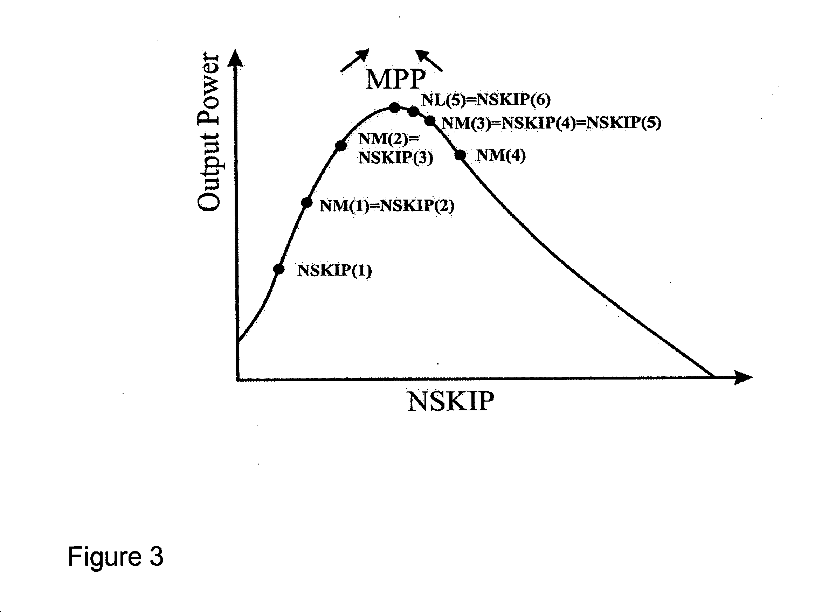

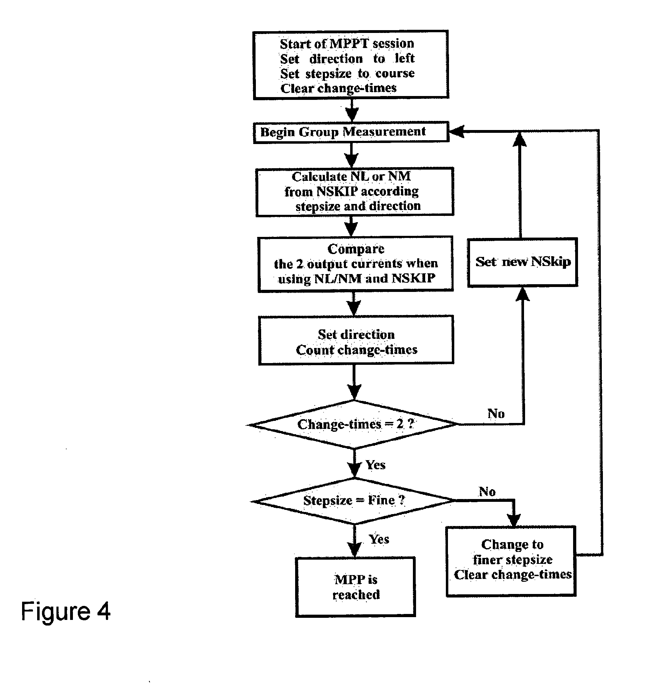

The state flow of the hill-climbing algorithm is shown in **Figure 4**. The algorithm carries out a series of group measurements. Each group measurement consists of two measurements of the converter output current using two different NSKIP values. One is the present NSKIP and the other is either NL (NSKIP less than the present one) or NM (NSKIP more than the present one). The value of NM or NL is calculated on the basis of the current step size and the current NSKIP value. NL or NM will be chosen on the basis of the previous measured positive direction of output current. If the previous positive direction was "left", NL is calculated and, if "right", NM is calculated. The two values correspond to two different operation points on the power curve as shown in **Figure 3.**

At the end of each group measurement, the measured output currents are compared with each other. The higher one sets the new direction and the NSKIP value associated with it becomes the new NSKIP of the next group measurement, from which a new NL or NM will be calculated. Normally the direction stays the same until current NSKIP is close to the MPP. In this region, however, it is possible that NSKIP is closer than NM (or NL). As a result, each time the current NSKIP wins, the direction will change. If the direction changes twice, indicating that positions are at both sides of the hill, the algorithm changes to the fine step size, if the current step size is coarse. If the current step size is already fine, the algorithm declares MPP to be reached. This $I_{sc}$/NSKIP pair is stored in the lookup table.

The look-up table 50 contains the index/value pairs. Its size is pre-defined to accommodate the expected possible $I_{sc}$ current magnitudes. In the present example, the number of indices is 512 - it could typically be between 128 and 1024, say. The values are stored as long as the system is powered up. The content of the table is reset to zero at system power-up.

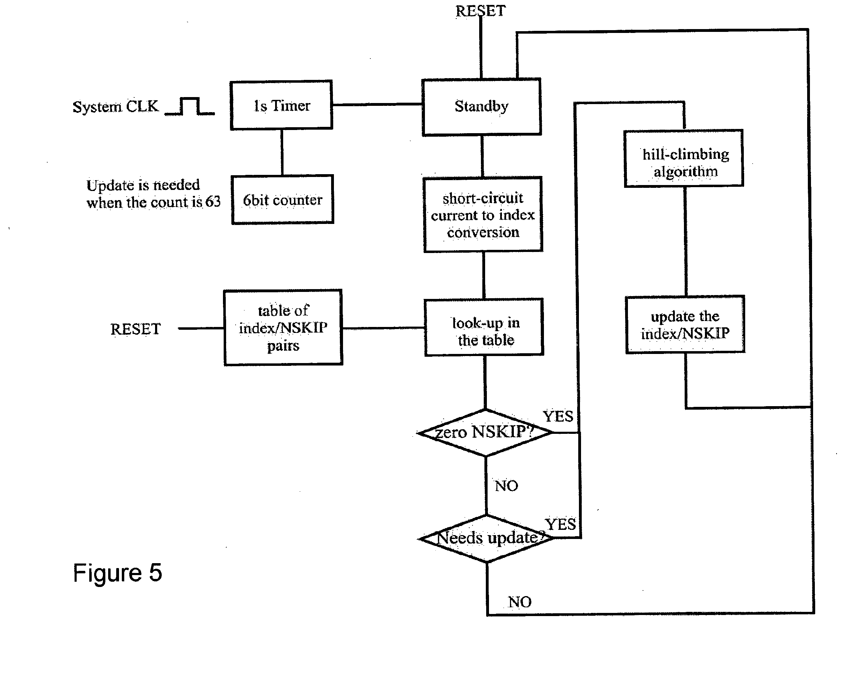

The controller 30 coordinates the operation of the three parts and contains the MPPT algorithm. **Figure 5** shows the state flow of the controller. The controller stays in Stand-by mode when not triggered, and it is triggered e.g. once every second by a timer. When triggered, the MPPT session is started. At the beginning, the short-circuit current of the solar cell is sampled and converted into an index idx. Then the NSKIP value stored at this index is read from the look-up table.

If the value is zero, a new entry must be generated and stored in the table; the hill-climbing algorithm or subroutine will therefore be invoked to find the optimal NSKIP value. This optimal value is then stored in the table at the position of the index. If the value is not zero and the session is not an update session (see below), this value is then read from the look-up table and used as the optimal NSKIP value without executing the hill-climbing algorithm. In both cases, the controller enters Stand-by mode again and waits for the next trigger.

To allow for longer-term variations, e.g. change of ambient conditions or deterioration of the solar cell array, there is one update session/subroutine every 64 MPPT sessions, i.e. every minute or so (64 is purely a typical number and can vary according to system properties; it is usually at least 10). This means that when the current session is an update session, the stored value will be updated and the hill-climbing algorithm invoked even when the value is non-zero.

This technique can be implemented with an ultra-low-power digital controller 30; it is based on the reliable hill-climbing technique or other empirical techniques; it is efficient and fast by virtue of the re-use; and the very short sensing time - say less than 1% or less than 0.1% of operational time - of the short-circuit current causes less disturbance to the energy flow of the solar-cell array.

The hardware implementation of the controller can be in any suitable form, for instance on a custom chip implemented by so-called "digital flow". The basis of this is customized VHDL code, describing and defining all controller actions and parts. When the VHDL is synthesized, the final result is a digital hardware implementation on the chip, consisting of digital gates. Alternatively the implementation could be a microprocessor, albeit with some additional hardware. For an ultra-low-power application, the power dissipation of a such a processor unit is too high (order of mW), whereas for indoor applications one typically needs power dissipation of the order of 1 μW; the "digital flow" technique can synthesize and run the entire controller on a relatively low supply voltage and a relatively low clock speed, so as to obtain the required low power dissipation for the controller.

It may be noted that, if the irradiation level changes during the hill-climbing process, the saved data may not be correct: the values are only corrected when the table is updated. This can be mitigated, however, by optimizing the update interval according to the environmental conditions.

While the embodiments described have used hill-climbing as the iterative algorithm for finding the MPP, others are conceivable. Also, although the invention is conceived with low-power applications in mind, i.e. where the power required to run the MPPT system is comparable to the output of the array, there is no reason why it could not be used with solar panels, for example.

In summary, the invention combines two hitherto mutually exclusive methods: short-circuit-current methods and look-up table methods are efficient and fast but they are dependent on the properties of the solar cell and temperature. The hill-climbing method is independent of the solar cell and temperature but takes a long time to reach the maximum power point. Embodiments take advantage of the hill-climbing method but circumvent its weakness of time consumption by registering already acquired optimum power points, together with the short-circuit current, in a look-up table and, at least for most readings, skipping the hill-climbing process for existing table entries.

## Claims

1. A method of controlling the output of a photovoltaic array (10) subject to varying external influences, the output being adjustable by altering at least one operating parameter (NSKIP), the method including the following steps:

    (a) referring to a table (50) giving values of the operating parameter in relation to an index (idx), from which the operating parameter (NSKIP) corresponding to the maximum-power point of the array under different external influences is to be determined;
    (b) if the table contains an entry for the current index value, using that entry to establish the operating parameter;
    (c) if the table does not contain an entry, carrying out a recursive procedure to establish the value of the operating parameter appropriate for the instantaneous maximum power point MPP;
    (d) storing the parameter value corresponding to this MPP in the table; and
    (e) repeating steps (a) to (d) at intervals.

2. A method according to claim 1, in which the index is proportional to the short-circuit current $I_{sc}$ of the array.

3. A method according to claim 2, in which the short-circuit current is measured while the photovoltaic array is reverse-biased.

4. A method according to any preceding claim, in which the recursive procedure of step c) involves measuring the output current of a DC/DC converter (20) converting the output of the array (10), and maximising this value to establish the MPP.

5. A method according to any preceding claim, in which periodically the recursive procedure is carried out even if an entry is present, to establish an updated entry value.

6. A method according to any preceding claim, in which the recursive procedure is a hill-climbing procedure.

7. A control system for a photovoltaic array subject to varying external influences, the output being adjustable by altering at least one operating parameter (NSKIP), including the following components:

    (a) a table (50) for storing values of the operating parameter in relation to an index (idx) from which the operating parameter (NSKIP) corresponding to the maximum-power point of the array under different external influences is to be determined;

(b) a lookup means (30) for reading an entry for the current index value and, if one is present, using that entry as the operating parameter; and, if the table does not contain an entry, calling a subroutine to generate a value for the operating parameter;

(c) means (30) for generating an entry corresponding to the index value by running an recursive procedure for finding the instantaneous maximum-power point MPP; and

(d) means (30) for storing the parameter value corresponding to this MPP in the table (50).

8. A control system according to claim 7, further including a current sampler (40) measuring $I_{SC}$ as the index value (idx), the sampler preferably containing a current mirror (42), a sample-and-hold circuit (44), a relaxation oscillator (46) and a counter (48).

9. An energy-harvesting system comprising a photovoltaic array (10) and a control system according to claim 7 or 8.

10. An energy-harvesting system according to claims 7 and 9, further having switches (S5-S8) connecting the array to the sampler (40).

11. A method of measuring the output of a photovoltaic array subject to varying external influences, the method having the following steps:

i) disconnecting the array from its load, if it is connected;

ii) connecting a reverse voltage across the array; and

iii) measuring the resulting current.

12. A method according to claim 11, in which the measurement is carried out at intervals, representing a small fraction of the normal (forward-connected) operating cycle.

13. A method according to claim 11 or 12, in which the measuring is done by converting the current into another variable such as a frequency and then digitised, and optionally by sampling using a sample-and-hold circuit (40).

14. A method for maximum-power-point tracking, in which the output of a photovoltaic array is controlled on the basis of a lookup table whose values are ascertained by measurement, the measurement being made according to any of claims 7 to 13.

15. An apparatus for measuring the current from a photovoltaic array, having

a) co-ordinated switches (S5, S8; S6, S7) connected to the array (10) in pairs in such a way that when one pair is on and the other is off the array is connected to a load, while when the pairs are reversed the array is reverse-connected to a voltage source (60); and

b) a means (40) for measuring the resulting reverse short-circuit current.

**Patentansprüche**

1. Verfahren zur Steuerung des Ausgangs einer Photovoltaikanlage (10), die verschiedenen äußeren Einflüssen unterliegt, wobei der Ausgang sich durch Veränderung von mindestens einem Arbeitsparameter (NSKIP) einstellen lässt, wobei das Verfahren die folgenden Schritte umfasst:

(a) Hinzuziehen einer Tabelle (50), die die Werte des Arbeitsparameters in Bezug auf einen Index (idx) angibt, aus denen der Arbeitsparameter (NSKIP), der dem maximalen Energiepunkt der Anlage unter verschiedenen äußeren Einflüssen entspricht, zu bestimmen ist;

(b) wenn die Tabelle einen Eintrag für den aktuellen Indexwert enthält, Verwenden dieses Eintrags zur Erstellung des Arbeitsparameters;

(c) wenn die Tabelle keinen Eintrag enthält, Ausführen eines rekursiven Verfahrens, damit der Wert des Arbeitsparameters erstellt wird, der für den momentanen maximalen Energiepunkt MPP geeignet ist;

(d) Speichern des Parameterwertes, der diesem MPP entspricht, in der Tabelle; und

(e) Wiederholen der Schritte (a) bis (d) in Intervallen.

2. Verfahren nach Anspruch 1, wobei der Index proportional zum Kurzschlussstrom $I_{SC}$ der Anlage ist.

3. Verfahren nach Anspruch 2, wobei der Kurzschlussstrom gemessen wird, während die Photovoltaikanlage in Sperrrichtung betrieben wird.

4. Verfahren nach einem vorhergehenden Anspruch, wobei bei dem rekursiven Verfahren von Schritt c) der Ausgangsstrom eines DC/DC-Wandlers (20), der den Ausgang von Anlage (10) wandelt, gemessen wird, und dieser Wert zur Erstellung des MPP maximiert wird.

5. Verfahren nach einem vorhergehenden Anspruch, in dem das rekursive Verfahren selbst bei vorhandenem Eintrag periodisch ausgeführt wird, damit ein aktualisierter Eintragswert erstellt wird.

6. Verfahren nach einem vorhergehenden Anspruch, wobei das rekursive Verfahren ein Bergsteiger-Algorithmus-Verfahren ist.

**7.** Steuersystem für eine Photovoltaikanlage, die verschiedenen äußeren Einflüssen unterliegt, wobei sich der Ausgang einstellen lässt, indem mindestens ein Arbeitsparameter (NSKIP), einschließlich der folgenden Komponenten, verändert wird;

(a) eine Tabelle (50) zum Speichern von Werten der Arbeitsparameter in Bezug auf einen Index (idx), aus dem der Arbeitsparameter (NSKIP), der dem maximalen Energiepunkt der Anlage unter verschiedenen äußeren Einflüssen entspricht, zu bestimmen ist;

(b) eine Nachschlageeinrichtung (30) zum Lesen eines Eintrags für den aktuellen Indexwert und sofern ein solcher vorliegt, Verwenden dieses Eintrags als Arbeitsparameter; und sofern die Tabelle keinen Eintrag aufweist, Aufrufen einer Subroutine, so dass ein Wert für den Arbeitsparameter erstellt wird;

(c) Einrichtung (30) zum Erstellen eines Eintrags, der dem Indexwert entspricht, durch Ausführen eines rekursiven Verfahrens zum Auffinden des momentanen maximalen Energiepunktes MPP; und

(d) Einrichtung (30) zum Speichern des Parameterwerts, der diesem MPP entspricht, in der Tabelle (50).

**8.** Steuersystem nach Anspruch 7, zudem umfassend einen Stromprüfer (40), der $I_{sc}$ als Indexwert (idx) misst, wobei der Prüfer vorzugsweise einen Stromspiegel (42), eine Abtaste-Halte-Schaltung (44), einen KippOszillator (46) und eine Zähleinrichtung (48) enthält.

**9.** Energieerntesystem, umfassend eine Photovoltaikanlage (10) und ein Steuersystem nach Anspruch 7 oder 8.

**10.** Energieerntesystem nach den Ansprüchen 7 und 9, das zudem Schalter (S5 - S8) aufweist, die die Anlage mit dem Prüfer (40) verbinden.

**11.** Verfahren zum Messen des Ausgangs einer Photovoltaikanlage, die verschiedenen äußeren Einflüssen unterliegt, wobei das Verfahren die folgenden Schritte aufweist:

i) Abkoppeln der Anlage von ihrer Last, sofern sie angeschlossen ist;
ii) Anschließen einer Umkehrspannung über die Anlage; und
iii) Messen des resultierenden Stroms.

**12.** Verfahren nach Anspruch 11, wobei die Messung in Intervallen durchgeführt wird, was einen kleinen Teil des normalen (vorwärts angeschlossenen) Arbeitszyklus darstellt.

**13.** Verfahren nach Anspruch 11 oder 12, wobei das Messen erfolgt, indem der Strom in eine andere Variable, wie Frequenz, umgewandelt und anschließend digitalisiert wird und gegebenenfalls mit einer Abtaste-Halte-Schaltung (40) abgetastet wird.

**14.** Verfahren zum Verfolgen des maximalen Energiepunktes, wobei der Ausgang einer Photovoltaikanlage auf der Basis einer Nachschlagetabelle gesteuert wird, deren Werte durch Messung ermittelt werden, wobei die Messung nach einem der Ansprüche 7 bis 13 erfolgt.

**15.** Vorrichtung zur Messung des Stroms aus einer Photovoltaikanlage, die folgendes aufweist:

a) koordinierte Schalter (S5, S8; S6, S7), die derart paarweise an die Anlage (10) angeschlossen sind, dass die Anlage bei einem angeschalteten und einem abgeschalteten Paar mit einer Last verbunden ist, wohingegen die Anlage bei umgekehrten Paaren an die Spannungsquelle (60) verpolt angeschlossen ist; und
b) eine Einrichtung (40) zum Messen des resultierenden UmkehrKurzschlussstroms.

**Revendications**

**1.** Procédé de commande de la sortie d'un réseau photovoltaïque (10) sujet à des influences extérieures qui varient, la sortie étant ajustable en modifiant au moins un paramètre de fonctionnement (NSKIP), le procédé incluant les étapes suivantes :

(a) se reporter à une table (50) fournissant des valeurs du paramètre de fonctionnement relativement à un indice (idx), à partir duquel le paramètre de fonctionnement (NSKIP) correspondant au point d'alimentation maximum du réseau sous différences influences extérieures doit être déterminé ;
(b) si la table contient une entrée pour la valeur d'indice courante, utiliser cette entrée pour établir le paramètre de fonctionnement ;
(c) si la table ne contient pas d'entrée, exécuter une procédure récursive pour établir la valeur du paramètre de fonctionnement appropriée pour le point d'alimentation maximum instantané MPP ;
(d) stocker la valeur de paramètre correspondant à ce MPP dans la table ; et
(e) répéter les étapes (a) à (d) à des intervalles.

**2.** Procédé selon la revendication 1, dans lequel l'indice est proportionnel au courant de court-circuit $I_{sc}$ du réseau.

3. Procédé selon la revendication 2, dans lequel le courant de court-circuit est mesuré pendant que le réseau photovoltaïque est sous polarisation inverse.

4. Procédé selon l'une quelconque des revendications précédentes, dans lequel la procédure récursive de l'étape c) implique la mesure du courant de sortie d'un convertisseur CC/CC (20) convertissant la sortie du réseau (10), et amenant cette valeur au maximum to établir le MPP.

5. Procédé selon l'une quelconque des revendications précédentes, dans lequel la procédure récursive est exécutée périodiquement même si une entrée est présente, pour établir une valeur d'entrée mise à jour.

6. Procédé selon l'une quelconque des revendications précédentes, dans lequel la procédure récursive est une procédure de montée.

7. Système de commande pour un réseau photovoltaïque sujet à des influences externes qui varient, la sortie étant ajustable en modifiant au moins un paramètre de fonctionnement (NSKIP), incluant les composants suivantes :

   (a) une table (50) pour stocker des valeurs du paramètre de fonctionnement relativement à un indice (idx) à partir duquel le paramètre de fonctionnement (NSKIP) correspondant au point d'alimentation maximum du réseau sous différentes influences externes doit être déterminé ;
   (b) un moyen de consultation (30) pour lire une entrée pour la valeur d'indice courante et, si une telle valeur est présente, utiliser cette entrée comme paramètre de fonctionnement et, si la table ne contient pas d'entrée, appeler une sous-routine pour produire une valeur pour le paramètre de fonctionnement ;
   (c) un moyen (30) pour produire une entrée correspondant à la valeur d'indice en exécutant une procédure récursive pour trouver le point d'alimentation maximum instantané MPP ; et
   (d) un moyen (30) pour stocker la valeur de paramètre correspondant à ce MPP dans la table (50).

8. Système de commande selon la revendication 7, comprenant en outre un échantillonneur de courant (40) mesurant l'$I_{sc}$ comme valeur d'indice (idx), l'échantillonneur contenant de préférence un miroir de courant (42), un circuit d'échantillonnage et de maintien (44), un oscillateur de relaxation (46) et un compteur (48).

9. Système de récupération d'énergie comprenant un réseau photovoltaïque (10) et un système de commande selon la revendication 7 ou 8.

10. Système de récupération d'énergie selon les revendications 7 et 9, ayant en outre des commutateurs (S5-S8) connectant le réseau à l'échantillonneur (40).

11. Procédé de mesure de la sortie d'un réseau photovoltaïque sujet à des influences extérieures qui varient, le procédé ayant les étapes suivantes :

   i) déconnecter le réseau de sa charge, s'il est connecté ;
   ii) connecter une tension d'inversion au réseau ; et
   iii) mesurer le courant qui en résulte.

12. Procédé selon la revendication 11, dans lequel la mesure est effectuée à des intervalles, représentant une petite fraction du cycle de fonctionnement normal (connecté vers l'avant).

13. Procédé selon la revendication 11 ou 12, dans lequel la mesure est effectuée en convertissant le courant en une autre variable comme une fréquence et ensuite numérisé, et en option en échantillonnant en utilisant un circuit d'échantillonnage et de maintien (40).

14. Procédé pour un suivi d'un point d'alimentation maximum, dans lequel la sortie d'un réseau photovoltaïque est commandée sur la base d'une table de consultation dont les valeurs ont établies par mesure, la mesure étant effectuée en accord avec l'une quelconque des revendications 7 à 13.

15. Appareil de mesure du courant d'un réseau photovoltaïque, comportant

   a) des commutateurs coordonnés (S5, S8 ; S6, S7) connectés au réseau (10) en paires de telle manière que lorsqu'une paire est en service et l'autre est hors service, le réseau est connecté à une charge, alors que lorsque les paires sont inversées, le réseau est inversement connecté à une source de tension (60) ; et
   b) un moyen (40) pour mesurer le courant de court-circuit inverse qui en résulte.

Figure 1a

EP 2 607 980 B1

Figure 1b

EP 2 607 980 B1

$$Pin_{avg} = \frac{(V_{PV} \cdot T_{ON})^2}{2 \cdot L \cdot (NSKIP \cdot T_{CLK} + T_{ON})}$$

$$P_{PV} = V_{PV} \cdot I_{PV}$$

$$P_{PV} = Pin_{avg}$$

Figure 2

Figure 3

EP 2 607 980 B1

Figure 4

Figure 5

RESET

System CLK ⊓⊔ → 1s Timer → Standby

Update is needed when the count is 63 | 6bit counter

short-circuit current to index conversion

RESET → table of index/NSKIP pairs → look-up in the table

zero NSKIP? — YES

NO

Needs update? — YES

NO

hill-climbing algorithm

update the index/NSKIP

EP 2 607 980 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. SALAS ; E. OLIAS ; A. BARRADO ; A. LAZARO.** Review of the maximum power point tracking algorithms for stand-alone photovoltaic systems. *Solar Energy Materials and Solar Cells,* 06 July 2006, vol. 90 (11), 1555-1578

- **MEHRNAMI ; FARANGI.** Innovative Decision Reference Based algorithm for Photovoltaic Maximum Power Point Tracking. *Journal Of Power Electronics,* September 2010, vol. 10 (5), 528-537